# EUROPEAN PATENT SPECIFICATION

(11) **EP 1 662 495 B1**
(45) Date of publication and mention of the grant of the patent: **14.05.2008**
(21) Application number: 05110406.5
(22) Date of filing: 07.11.2005
(51) Int. Cl.: G11B 7/007

(54) **Information Storage Medium**
Informationsspeichermedium
Support de stockage d'informations

(30) Priority: 30.11.2004 JP 2004346567
(43) Date of publication of application: 31.05.2006
(73) Proprietor: KABUSHIKI KAISHA TOSHIBA, Tokyo 105-8001 (JP)
(72) Inventor: Ootera, Yasuaki, 105-8001, Tokyo (JP); Takazawa, Koji, 105-8001, Tokyo (JP); Morishita, Naoki, 105-8001, Tokyo (JP); Morita, Seiji, 105-8001, Tokyo (JP); Nakamura, Naomasa, 105-8001, Tokyo (JP); Ogawa, Akihito, 105-8001, Tokyo (JP)
(74) Representative: Henkel, Feiler & Hänzel

(56) References cited:
- WO-A-98/58368
- WO-A-20/04093066
- US-A1- 2003 076 775

## Description

The present invention relates to a disc-like information storage medium such as DVD-R.

An optical disc such as a DVD has a region called a burst cutting area (BCA) in which a barcode pattern is recorded. This barcode pattern is recorded by burning off a reflecting film of the disc by a laser, or by changing the phase of a phase-changing recording film of the disc. For example, Jpn. Pat. Appln. KOKAI Publication No. 2004-152429 proposes a technique of recording a barcode pattern on a disc by synchronizing a modulation signal corresponding to the barcode pattern with a signal from a disc rotating motor.

In order to process a next-generation optical disc whose recording density is higher than that of a current-generation optical disc, a laser beam having a wavelength shorter than that of a laser used to process the current-generation optical disc is used.

The recording characteristics of a WORM optical disc using a dye material depend on the wavelength of a laser beam. Therefore, the next-generation optical disc corresponding to a short wavelength has the problem that a barcode pattern cannot be appropriately recorded by a long-wavelength laser beam corresponding to processing of the current-generation optical disc.

WO-A-98/58368 discloses a system and method of identifying programs contained on a disk of any format, including, for example, either a single-sided or a double-sided disk with either a single-layer or multi-layer tracks. In particular, a dual-sided recording medium is disclosed having respective program data on the first and the second sides of said medium. In addition, the medium has a first area on the first side and a second area on the second side, and the areas have laser encoded data representing individualizable information relating to said respective program data. The areas may or may not overlap each other depending on the configuration chosen. Also disclosed is an apparatus for laser encoding the above-described recording medium, and a method for processing a disk having more than one laser encoded areas.

It is an object of the present invention to provide an information storage medium having a barcode pattern (management information) appropriately recorded by a long-wavelength laser, and capable of recording data by a short-wavelength laser.

An information storage medium as an example of the present invention comprises a recording layer formed by a dye material having a predetermined sensitivity level or more to both a light beam having a first waveband and a light beam having a second waveband shorter than the first waveband, wherein the recording layer comprises a concentric management information area, and a concentric data area, the management information area includes a plurality of bar-like patterns formed by the light beam having the first waveband, and arranged in a circumferential direction, the plurality of bar-like patterns arranged in the circumferential direction forming management information, and the data area is configured to record data by the light beam having the second waveband, characterized in that letting A1 be an absorbance when the dye material is irradiated with the light beam having the first waveband, and A2 be an absorbance when the dye material is irradiated with the light beam having the second waveband, the dye material has a light absorption characteristic which satisfies A1 ≥ A2 x 0.5.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing a burst cutting area (BCA) structure on an optical disc (WORM optical disc) as an example of an information storage medium of the present invention;
FIG. 2 is a view showing an example of the flow of a method of manufacturing this optical disc;
FIG. 3 is a graph showing examples of the absorbance characteristics of dye mixtures obtained by mixing, at several mixing ratios, dyes having a predetermined sensitivity level or more to a 650-nm light beam in base dyes having a predetermined sensitivity level or more to a 405-nm light beam;
FIG. 4 is a view showing four examples of dyes a to d as base dye materials sensitive to a 405-nm light beam;
FIGS. 5A to 5C are graphs showing examples of the light absorption characteristics of the dyes a to c;
FIGS. 6A and 6B are graphs showing examples of the light absorption characteristics of the dye d; and
FIGS. 7A to 7G are graphs showing examples of the light absorption characteristics of dyes f to l.

Embodiments of the present invention will be described below with reference to the accompanying drawing.

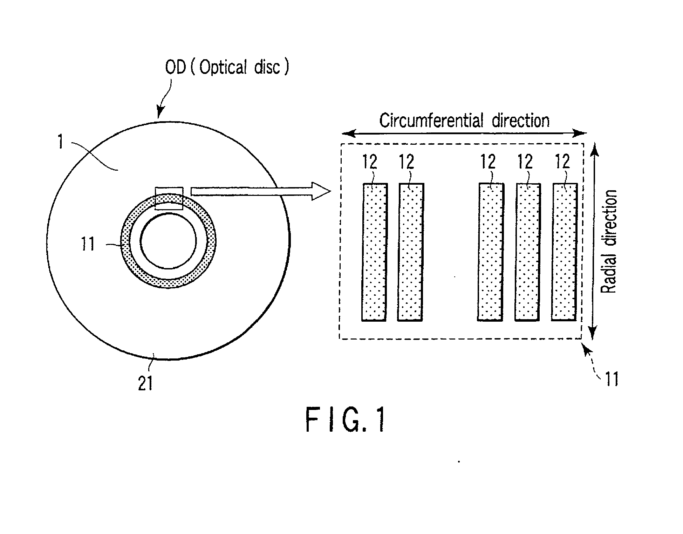

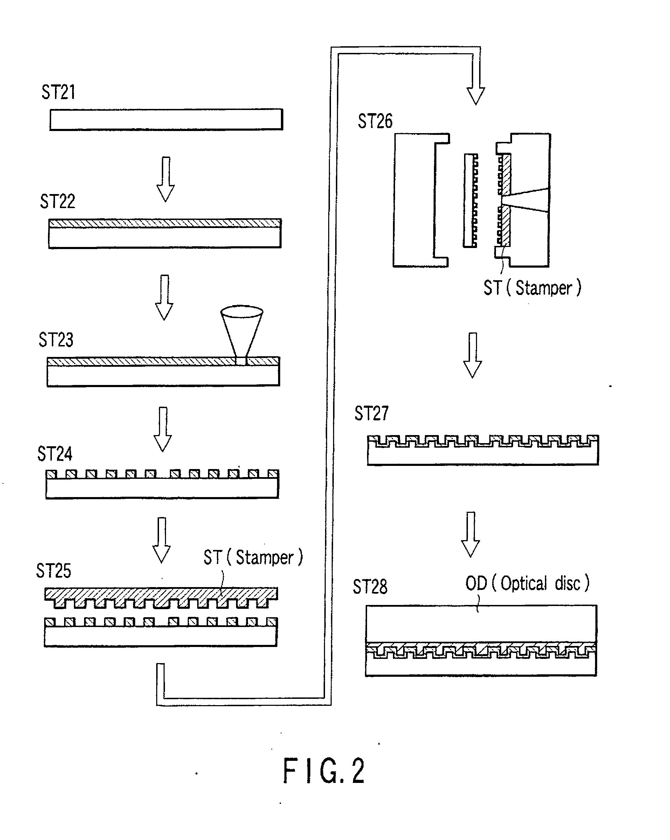

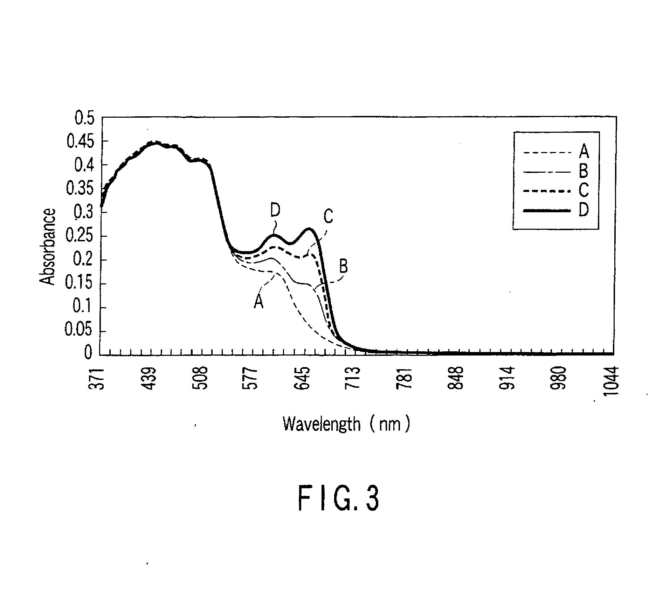

FIG. 1 is a view showing a burst cutting area (BCA) structure on an optical disc (WORM optical disc) as an example of an information storage medium of the present invention. FIG. 2 is a view showing the flow of a method of manufacturing this optical disc. FIG. 3 is a graph showing the absorbance characteristics of dye mixtures obtained by mixing, at several mixing ratios, dyes having a predetermined sensitivity level or more to a 650-nm light beam in base dyes having a predetermined sensitivity level or more to a 405-nm light beam.

When an optical disc OD is to be manufactured, disc unique information or management information is recorded on the disc. The disc unique information is, e.g., copy protection information. For example, the copy protection information is used to identify each disc.

On the optical disc such as a CD, DVD, BD, or HD-DVD, the disc unique information or the management information is recorded in advance as a barcode pattern in the BCA in the inner peripheral portion of the disc. In order to form on the disc the BCA in which the barcode pattern is recorded, the barcode pattern to be recorded in the BCA may be recorded on a stamper serving as a mold tool when the optical disc is to be manufactured. To record unique information on each disc, it is also possible to record a barcode pattern in the BCA of the manufactured disc by a laser. In a read-only disc, a barcode pattern is recorded by burning off a reflecting film of aluminum or the like by a laser beam. On the other hand, in a phase-change recording type disc, a barcode pattern is recorded by changing the reflectance by changing the phase of a phase-change recording film by a laser.

Unfortunately, a WORM optical disc using an organic dye material has the problem that no BCA pattern can be appropriately recorded even by emitting a laser beam by using a BCA recording apparatus. One reason is that the dependence of the dye material on the wavelength is high. The BCA recording apparatus records a BCA pattern on an optical disc by using a laser beam having a current-generation wavelength (e.g., 650 nm). However, no BCA pattern can be appropriately formed even when a laser beam having the current-generation wavelength (e.g., 650 nm) is applied to an optical disc corresponding to a next-generation short wavelength (e.g., 405 nm). Also, the WORM optical disc uses a silver (Ag)-based material having a high thermal conduction as a reflecting film. The power density of a laser spot output from the BCA recording apparatus is low, so the heat quantity is insufficient. Accordingly, this BCA recording apparatus cannot appropriately record any BCA pattern on the WORM optical disc because the sensitivity is insufficient.

In the present invention, therefore, a WORM optical disc (an optical disc corresponding to a wavelength of 405 nm) is formed by using the following organic dye material as a recording layer. That is, the organic dye material forming a recording layer 1 of the WORM optical disc OD of the present invention is obtained by mixing a dye material (second dye material) having a predetermined sensitivity level or more to a light beam having a wavelength of 600 to 700 nm in a next-generation optical disc dye material (first dye material) having a predetermined sensitivity level or more to a light beam having a wavelength of 405 nm. That is, the organic dye material forming the recording layer 1 of the WORM optical disc OD of the present invention has a recording sensitivity to a light beam having a wavelength of 600 to 700 nm used as a laser beam source of the BCA recording apparatus, and also has a recording sensitivity to a light beam having a wavelength of 405 nm. The recording layer 1 of the optical disc OD also has a BCA 11 positioned on a concentric inner circumferential side and a data area 21 positioned on a concentric outer circumferential side. The BCA 11 has a plurality of BCA patterns (bar-like patterns) 12 formed by a light beam having a wavelength of 600 to 700 nm and arranged in the circumferential direction. The BCA patterns 12 arranged in the circumferential direction form management information. Note that the BCA pattern 12 is a barcode pattern having a width (in the tangent direction) of a few ten µm and a length (in the radial direction) of about a few hundred µm. On the other hand, the data area 21 is capable of recording user data by a 405-nm light beam.

In this embodiment, the optical disc OD is a WORM optical disc having a diameter of 120 mm and a thickness of 1.2 mm (two 0.6-mm thick polycarbonate molded substrates are adhered), and using the organic dye material as the recording layer 1, and the BCA 11 has a donut-like shape having a radius of 22.3 to 23.1 mm. Recording and playback of the optical disc OD are performed by using a wavelength of 405 nm as recording/playback light and an optical system having an NA of 0.65. Also, the distance (track pitch) between grooves formed in the data area 21 and adjacent to each other in the radial direction is 400 nm. Note that the present invention is not limited to these specifications.

The materials of the optical disc OD are as follows. The molded substrates are made of polycarbonate, the stamper for use in molding is made of nickel (Ni), the recording layer 1 is made of an organic dye material, i.e., an azo-, diazo-, cyanine-, phthalocyanine-, or styryl-based dye or a mixture of these dyes, the reflecting film is made of silver (Ag), aluminum (Al), gold (Au), or a metal compound based on any of these metals, and the adhesive is made of an acryl- or epoxy-based ultraviolet-curing resin. However, the present invention is not limited to these materials.

A method of manufacturing the optical disc OD will be explained below with reference to FIG. 2. A master is made of glass having a surface which is polished and cleaned (ST21). A photoresist is applied to the surface of the master (ST22), and the photoresist surface is exposed to a laser beam or the like to record information (ST23). Then, the exposed master is developed to form convex and concave portions such as pits or grooves (ST24). After that, the master is plated to form a stamper ST (ST25). The main material of the stamper ST is nickel. By using the stamper ST as a mold, the molded substrate made of a resin is formed by injection molding (ST26). Polycarbonate is used as the resin. An organic dye as a recording layer 1 is applied on the thus formed molded substrate by spin coating (ST27). A reflection layer is formed on the dye layer, and a substrate is adhered to form an optical disc (ST28). BCA patterns 12 unique to the disc are recorded in a BCA 11 of the adhered disc by a BCA recording apparatus.

The organic dye material forming the recording layer 1 of the optical disc OD is obtained by mixing a dye material (second dye material) having an absorbance of 0.15 or more when irradiated with a light beam having a wavelength of 600 to 700 nm (having an absorbance of 0.2 or more especially when irradiated with a light beam having a wavelength of 650 nm) in a dye material (first dye material) having an absorbance of 0.35 or more when irradiated with a light beam having a wavelength of 405 nm. That is, the organic dye material forming the recording layer 1 of the WORM optical disc OD of the present invention has a recording sensitivity to a light beam having a wavelength of 600 to 700 nm used as a laser beam source of the BCA recording apparatus, and also has a recording sensitivity to a light beam having a wavelength of 405 nm.

FIG. 3 shows cases in which a dye material (second dye material) having a predetermined sensitivity level or more to a 650-nm light beam is mixed, at ratios of (A) 0%, (B) 2.5%, (C) 5%, and (D) 7.5%, in a base dye material (first dye material) having a predetermined sensitivity level or more to a 405-nm light beam. Note that the dye material having a predetermined sensitivity level or more to a 650-nm light beam is a CD-R dye material having a maximum absorption wavelength of 650 nm.

As shown in FIG. 3, the absorbance changes near a wavelength of 650 nm. The mixing ratio is preferably 7.5%. If the mixing ratio is 5.0%, the sensitivity is insufficient. If the mixing ratio is 10%, the characteristics of the base dye material deteriorate. That is, when the dye material sensitive to a 650-nm light beam is mixed in the base dye material sensitive to a 405-nm light beam at a ratio of about 7.5%, it is possible to form a recording layer 1 having a predetermined sensitivity level or more to a 405-nm light beam and also having a predetermined sensitivity level or more to a 650-nm light beam. Letting A2 be the absorbance when the material is irradiated with a 405-nm light beam and A1 be the absorbance when the material is irradiated with a 650- to 700-nm light beam, the dye material forming the recording layer 1 has a light absorption characteristic meeting A1 ≥ A2 × 0.5 (the absorbance when the material is irradiated with a light beam having a wavelength of 650 nm is desirably 0.5 times or more the absorbance when the material is irradiated with a light beam having a wavelength of 405 nm).

When the dye material having the light absorption characteristic as indicated by D in FIG. 3 is used, the BCA patterns can be recorded on a next-generation optical disc OD1 corresponding to a wavelength of 405 nm by directly using the BCA recording apparatus corresponding to a wavelength of 600 to 700 nm of the current DVD. When the manufacturing lines of both the current DVD and next-generation DVD are installed, it is unnecessary to introduce any new expensive short-wavelength BCA recording apparatus.

WORM optical discs include a high-to-low medium in which the reflectance of recording marks becomes lower than that of an unrecorded portion, and a low-to-high medium in which the reflectance of recording marks becomes higher than that of an unrecorded portion (e.g., when dyes as described in Jpn. Pat. Appln. KOKAI Publication Nos. 2002-74740 and 2002-206061 are used). The present invention is applicable to either medium. In addition, the present invention is applicable not only to a case in which the BCA patterns 12 are recorded in the BCA 11 as shown in FIG. 1, but also to a case in which the BCA patterns 12 are formed by "unrecorded" portions such as blank characters.

Next, practical examples of the base dye material (first dye material) sensitive to a 405-nm light beam and the dye material (second dye material) sensitive to a 650-nm light beam will be explained below. An example of the dye material sensitive to a 650-nm light beam is a phthalocyanine-based dye material such as IRGAPHOR Ultra green MX manufactured by Ciba Speciality Chemicals.

Materials explained below can be used as the base dye material sensitive to a 405-nm light beam. The base dye material is made up of a dye portion and a counter ion (anion) portion. As the dye portion, it is possible to use, e.g., a cyanine dye and styryl dye. A cyanine dye and styryl dye are particularly favorable because the absorbance to the recording wavelength is readily controllable.

Of these dyes, a monomethinecyanine dye having a monomethine chain makes it possible to readily adjust the maximum absorption and the absorbance in the recording wavelength region (400 to 450 nm) to about 0.3 to 0.5, and preferably, about 0.4, if the recording film applied on the transparent resin substrate is thinned. This makes it possible to improve the recording/playback characteristics, and increase both the light reflectance and recording sensitivity.

The anion portion is preferably made of an organic metal complex from the viewpoint of light stability as well. An organic metal complex containing cobalt or nickel as the central metal particularly has a high light stability.

An azo metal complex is most favorable, and the solubility is high when 2,2,3,3-tetrafluoro-1-propanol (TFP) is used as a solvent, so a solution for spin coating can be easily prepared. Also, since recycling after spin coating is possible, the optical disc manufacturing cost can be decreased.

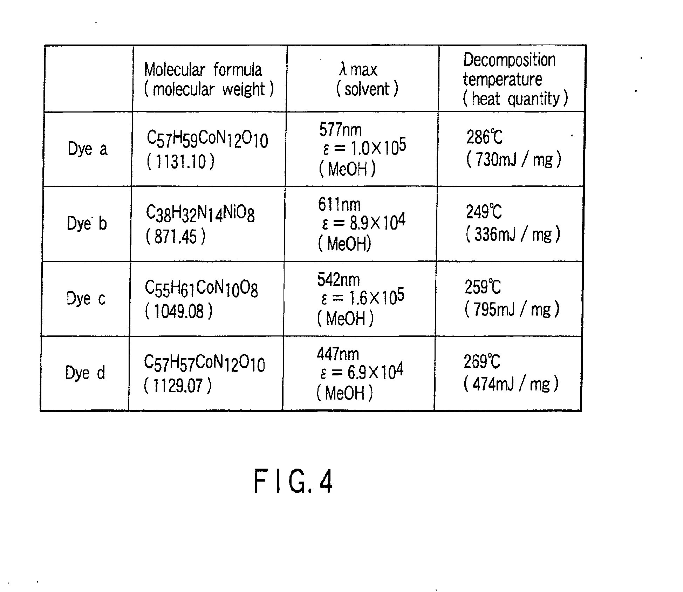

FIG. 4 shows four examples of dyes a to d as the organic dye materials. The dye a contains a styryl dye as the dye portion (cation portion), and an azo metal complex as the anion portion. The dye c contains a styryl dye as the dye portion (cation portion), and an azo metal complex as the anion portion. The dye d contains a monomethinecyanine dye as the dye portion (cation portion), and an azo metal complex as the anion portion. Note that an organic metal complex may also be singly used. For example, the dye b is a nickel complex dye.

The dye of the disc substrate coated with the thin organic dye film by spin coating is dried at about 80°C by a hotplate or clean oven, and a thin metal film serving as a light-reflecting film is formed on the thin dye film by sputtering. As this metal reflecting film material, it is possible to use, e.g., Au, Ag, Cu, Al, or an alloy of any of these metals.

After that, an ultraviolet-curing resin is applied on the metal film by spin coating, and a protective disc substrate is adhered, thereby manufacturing a WORM optical disc as a WORM information recording medium.

Formula 1 indicates the formula of a styryl dye as the dye portions of the dyes a and c, and formula 2 indicates the formula of an azo metal complex as the anion portions of the dyes a and c. Also, formula 3 indicates the formula of a monomethinecyanine dye as the dye portion of the dye d, and formula 4 indicates the formula of an azo metal complex as the anion portion of the dye d.

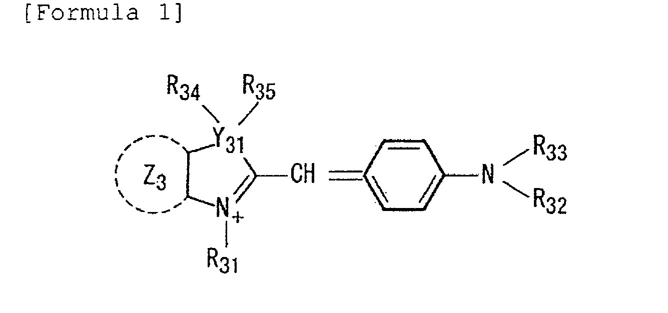

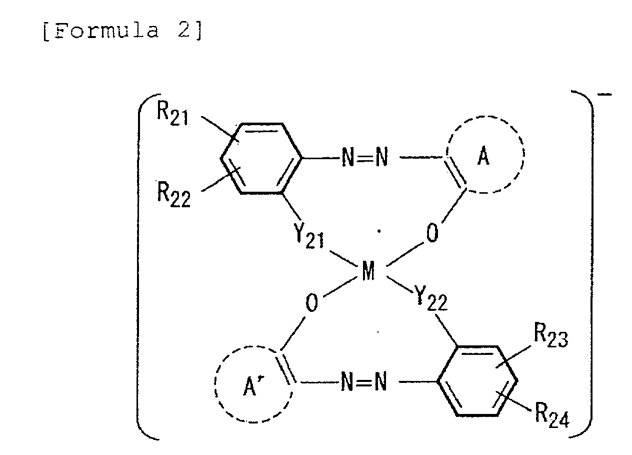

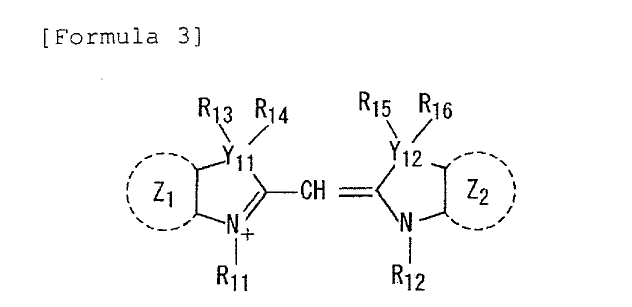

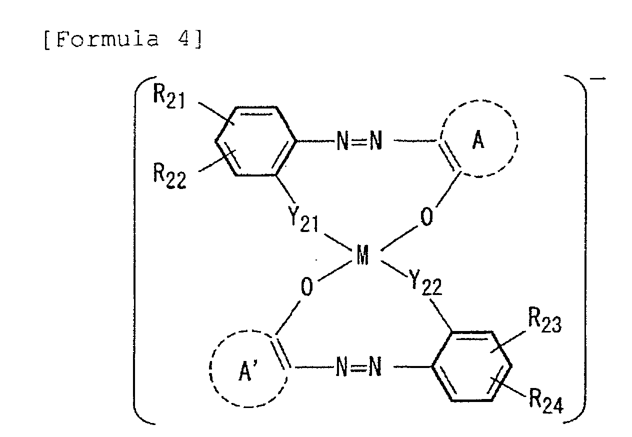

In the above formula of a styryl dye, Z3 represents an aromatic ring, and this aromatic ring may have a substituent. Y31 represents a carbon atom or hetero atom. R31, R32, and R33 represent the same aliphatic hydrocarbon group or different aliphatic hydrocarbon groups, and these aliphatic hydrocarbon groups may have substituents. R34 and R35 each independently represent a hydrogen atom or an appropriate substituent. If Y31 is a hetero atom, one or both of R34 and R35 do not exist.

Also, in the above formula of a monomethinecyanine dye, Z1 and Z2 represent the same aromatic ring or different aromatic rings, and these aromatic rings may have substituents. Y11 and Y12 each independently represent a carbon atom or hetero atom. R11 and R12 represent aliphatic hydrocarbon groups, and these aliphatic hydrocarbon groups may have substituents. R13, R14, R15, and R16 each independently represent a hydrogen atom or an appropriate substituent. If Y11 and Y12 are hetero atoms, some or all of R13, R14, R15, and R16 do not exist.

A monomethinecyanine dye used in this embodiment is a dye in which identical or different cyclic nuclei which may have one or a plurality of substituents are bonded to the two ends of a monomethine chain which may have one or a plurality of substituents. Examples of the cyclic nuclei are an imidazoline ring, imidazole ring, benzoimidazole ring, α-naphthoimidazole ring, β-naphthoimidazole ring, indole ring, isoindole ring, indolenine ring, isoindolenine ring, benzoindolenine ring, pyridinoindolenine ring, oxazoline ring, oxazole ring, isoxazole ring, benzoxazole ring, pyridinoxazole ring, α-naphthoxazole ring, β-naphthoxazole ring, selenazoline ring, selenazole ring, benzoselenazole ring, α-naphthoselenazole ring, β-naphthoselenazole ring, thiazoline ring, thiazole ring, isothiazole ring, benzothiazole ring, α-naphthothiazole ring, β-naphthothiazole ring, tellurazoline ring, tellurazole ring, benzotellurazole ring, α-naphthotellurazole ring, β-naphthotellurazole ring, acridine ring, anthracene ring, isoquinoline ring, isopyrrole ring, imidanoxaline ring, indandione ring, indazole ring, indaline ring, oxadiazole ring, carbazole ring, xanthene ring, quinazoline ring, quinoxaline ring, quinoline ring, chroman ring, cyclohexanedione ring, cyclopentanedione ring, cinnoline ring, thiodiazole ring, thioxazolidone ring, thiophene ring, thionaphthene ring, thiobarbituric acid ring, thiohydantoin ring, tetrazole ring, triazine ring, naphthalene ring, naphthyridine ring, piperazine ring, pyrazine ring, pyrazole ring, pyrazoline ring, pyrazolidine ring, pyrazolone ring, pyran ring, pyridine ring, pyridazine ring, pyrimidine ring, pyrylium ring, pyrrolidine ring, pyrroline ring, pyrrole ring, phenazine ring, phenanthridine ring, phenanthrene ring, phenanthroline ring, phthalazine ring, puterizine ring, furazane ring, furan ring, purine ring, benzene ring, benzoxazine ring, benzopyran ring, morpholine ring, and rhodanine ring.

In both the formulas of a monomethinecyanine dye and styryl dye, Z1 to Z3 represent aromatic rings such as a benzene ring, naphthalene ring, pyridine ring, quinoline ring, and quinoxaline ring, and these aromatic rings may have one or a plurality of substituents. Examples of the substituents are aliphatic hydrocarbon groups such as a methyl group, trifluoromethyl group, ethyl group, propyl group, isopropyl group, butyl group, isobutyl group, sec-butyl group, tert-butyl group, pentyl group, isopentyl group, neopentyl group, tert-pentyl group, 1-methylpentyl group, 2-methylpentyl group, hexyl group, isohexyl group, 5-methylhexyl group, heptyl group, and octyl group, alicyclic hydrocarbon groups such as a cyclopropyl group, cyclobutyl group, cyclopentyl group, and cyclohexyl group, aromatic hydrocarbon groups such as a phenyl group, biphenyl group, o-tolyl group, m-tolyl group, p-tolyl group, xylyl group, mesityl group, o-cumenyl group, m-cumenyl group, and p-cumenyl group, ether groups such as a methoxy group, trifluoromethoxy group, ethoxy group, propoxy group, isopropoxy group, butoxy group, sec-butoxy group, tert-butoxy group, pentyloxy group, phenoxy group, and benzoyloxy group, ester groups such as a methoxycarbonyl group, trifluoromethoxycarbonyl group, ethoxycarbonyl group, propoxycarbonyl group, acetoxy group, and benzoyloxy group, halogen groups such as a fluoro group, chloro group, bromo group, and iodo group, thio groups such as a methylthio group, ethylthio group, propylthio group, butylthio group, and phenylthio group, sulfamoyl groups such as a methylsulfamoyl group, dimethylsulfamoyl group, ethylsulfamoyl group, diethylsulfamoyl group, propylsulfamoyl group, dipropylsulfamoyl group, butylsulfamoyl group, and dibutylsulfamoyl group, amino groups such as a primary amino group, methylamino group, dimethylamino group, ethylamino group, diethylamino group, propylamino group, dipropylamino group, isopropylamino group, diisopropylamino group, butylamino group, dibutylamino group, and piperidino group, carbamoyl groups such as a methylcarbamoyl group, dimethylcarbamoyl group, ethylcarbamoyl group, diethylcarbamoyl group, propylcarbamoyl group, and dipropylcarbamoyl group, a hydroxy group, a carboxy group, a cyano group, a nitro group, a sulfino group, a sulfo group, and a mesyl group. Note that in the formula, Z1 and Z2 may be the same or different.

Y11, Y12, and Y31 in the formulas of a monomethinecyanine dye and styryl dye represent a carbon atom or hetero atom. Examples of the hetero atom are atoms in Groups 15 and 16 of the periodic table, e.g., a nitrogen atom, oxygen atom, sulfur atom, selenium atom, and tellurium atom. Note that the carbon atom represented by Y11, Y12, and Y31 may also be an atomic group mainly containing two carbon atoms, e.g., an ethylene group or vinylene group. Note also that in the formula of a monomethinecyanine dye, Y11 and Y12 may be the same or different.

R11, R12, R13, R32, and R33 in the formulas of a monomethinecyanine dye and styryl dye represent an aliphatic hydrocarbon group. Examples of the aliphatic hydrocarbon group are a methyl group, ethyl group, propyl group, isopropyl group, isopropenyl group, 1-propenyl group, 2-propenyl group, butyl group, isobutyl group, sec-butyl group, tert-butyl group, 2-butenyl group, 1,3-butadienyl group, pentyl group, isopentyl group, neopentyl group, tert-pentyl group, 1-methylpentyl group, 2-methylpentyl group, 2-pentenyl group, hexyl group, isohexyl group, 5-methylhexyl group, heptyl group, and octyl group. This aliphatic hydrocarbon group may have one or a plurality of substituents similar to those of Z1 to Z3.

Note that R11 and R12 in the formula of a monomethinecyanine dye and R13, R32, and R33 in the formula of a styryl dye may be the same or different.

R13 to R16, R34, and R35 in the formulas of a monomethinecyanine dye and styryl dye each independently represent a hydrogen atom or an appropriate substituent in the individual formulas. Examples of the substituent are aliphatic hydrocarbon groups such as a methyl group, trifluoromethyl group, ethyl group, propyl group, isopropyl group, butyl group, isobutyl group, sec-butyl group, tert-butyl group, pentyl group, isopentyl group, neopentyl group, tert-pentyl group, 1-methylpentyl group, 2-methylpentyl group, hexyl group, isohexyl group, 5-methylhexyl group, heptyl group, and octyl group, ether groups such as a methoxy group, trifluoromethoxy group, ethoxy group, propoxy group, butoxy group, tert-butoxy group, pentyloxy group, phenoxy group, and benzoyloxy group, halogen groups such as a fluoro group, chloro group, bromo group, and iodo group, a hydroxy group, a carboxy group, a cyano group, and a nitro group. Note that in the formulas of a monomethinecyanine dye and styryl dye, if Y11, Y12, and Y31 are hetero atoms, some or all of R13 to R16 in Z1 and Z2 and one or both of R34 and R35 in Z3 do not exist.

In the formula of an azo metal complex, A and A' represent 5- to 10-membered heterocyclic groups, such as a furyl group, thienyl group, pyrrolyl group, pyridyl group, piperidino group, piperidyl group, quinolyl group, and isoxazolyl group, which are the same or different and contain one or a plurality of hetero atoms selected from a nitrogen atom, oxygen atom, sulfur atom, selenium atom, and tellurium atom. This heterocyclic group may have one or a plurality of substituents, e.g., aliphatic hydrocarbon groups such as a methyl group, trifluoromethyl group, ethyl group, propyl group, isopropyl group, butyl group, isobutyl group, sec-butyl group, tert-butyl group, pentyl group, isopentyl group, neopentyl group, tert-pentyl group, 1-methylpentyl group, 2-methylpentyl group, hexyl group, isohexyl group, and 5-methylhexyl group, ester groups such as a methoxycarbonyl group, trifluoromethoxycarbonyl group, ethoxycarbonyl group, propoxycarbonyl group, acetoxy group, trifluoroacetoxy group, and benzoyloxy group, aromatic hydrocarbon groups such as a phenyl group, biphenyl group, o-tolyl group, m-tolyl group, p-tolyl group, o-cumenyl group, m-cumenyl group, p-cumenyl group, xylyl group, mesityl group, styryl group, cinnamoyl group, and naphthyl group, a carboxy group, a hydroxy group, a cyano group, and a nitro group.

Note that the azo compound forming an azo-based organic metal complex represented by the formula can be obtained in accordance with the conventional method by reacting diazonium salt having R21 and R22 or R23 and R24 corresponding to the formula with a heterocyclic compound, e.g., an isoxazolone compound, oxazolone compound, thionaphthene compound, pyrazolone compound, barbituric acid compound, hydantoin compound, or rhodanine compound, having an active methylene group adjacent to a carbonyl group in a molecule. Y21 and Y22 represent the same hetero atom or different hetero atoms selected from elements in Group 16 of the periodic table, e.g., an oxygen atom, sulfur atom, selenium atom, and tellurium atom.

An azo metal complex represented by the formula is normally used in the form of a metal complex in which one or a plurality of atoms are coordinated around the metal (central atom). Examples of the metal element as the central atom are scandium, yttrium, titanium, zirconium, hafnium, vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, zinc, cadmium, and mercury, and cobalt is particularly favorable.

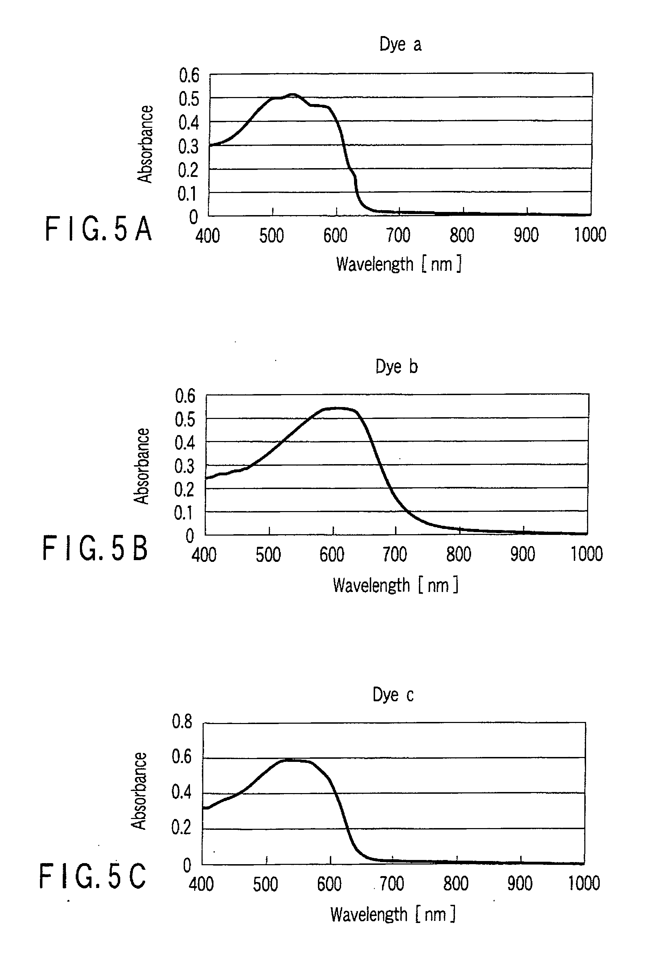

FIG. 5A shows a change in absorbance of the dye a with respect to the wavelength of an emitted laser beam. FIG. 5B shows a change in absorbance of the dye b with respect to the wavelength of an emitted laser beam. FIG. 5C shows a change in absorbance of the dye c with respect to the wavelength of an emitted laser beam.

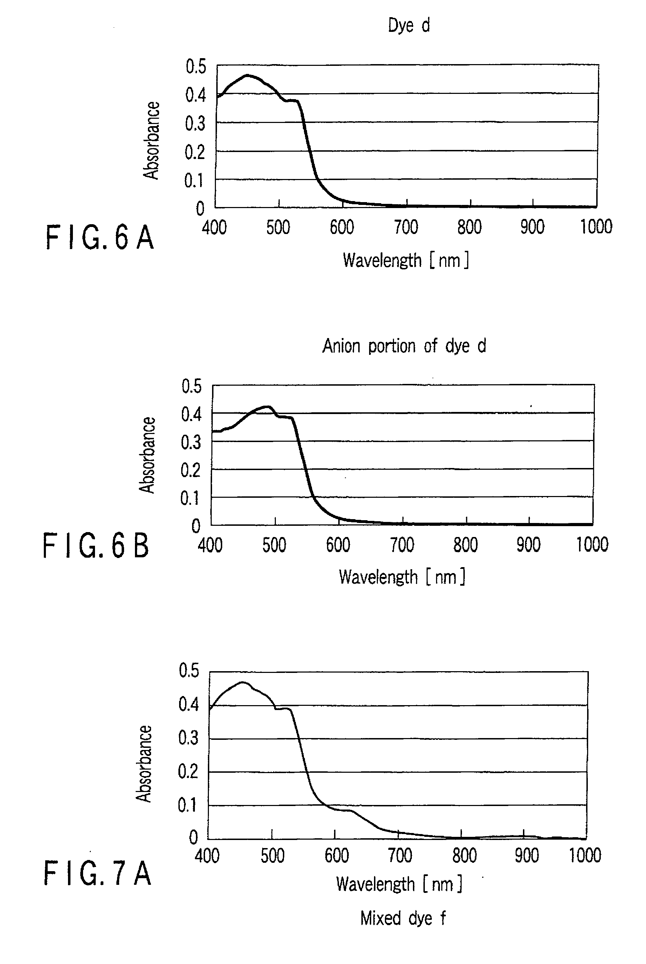

Also, FIG. 6A shows a change in absorbance of the dye d with respect to the wavelength of an emitted laser beam. FIG. 6B shows a change in absorbance of the anion portion of the dye d with respect to the wavelength of an emitted laser beam.

Organic dyes may also be seven types of mixed dyes f to l, instead of the four types of dyes a to d described above, which are obtained by mixing two or more types of the dyes a to d.

The mixed dye f is obtained by adding 5% of the dye b to the dye d, i.e., mixing 0.05 g of the dye b to 1 g of the dye d.

The mixed dye g is obtained by mixing a monomethinecyanine dye (anion portion azo metal complex 3) as the dye e to the dye d at a ratio of 7 : 3 (= D : E), and further adding 5% of the dye b, i.e., mixing 0.05 g of the dye b to 1 g of the dye in which the dyes d and e are mixed at a ratio of 7 : 3.

The mixed dye h is obtained by mixing the dye a to the dye d at a ratio of 1 : 1 (= D : A).

The mixed dye i is obtained by adding 10% of the dye b to the dye d, i.e., mixing 0.10 g of the dye b to 1 g of the dye d.

The mixed dye j is obtained by adding 15% of the dye b to the dye d, i.e., mixing 0.15 g of the dye b to 1 g of the dye d.

The mixed dye k is obtained by adding the azo metal complex 1 in the anion portion to the dye d to increase the anion ratio to dye portion : anion portion = 1 : 1.5, and further adding 15% of the dye b.

The mixed dye l is obtained by adding an azo metal complex 1 in the anion portion to the dye d to increase the anion ratio to dye portion : anion portion = 1 : 2.0, and further adding 15% of the dye b.

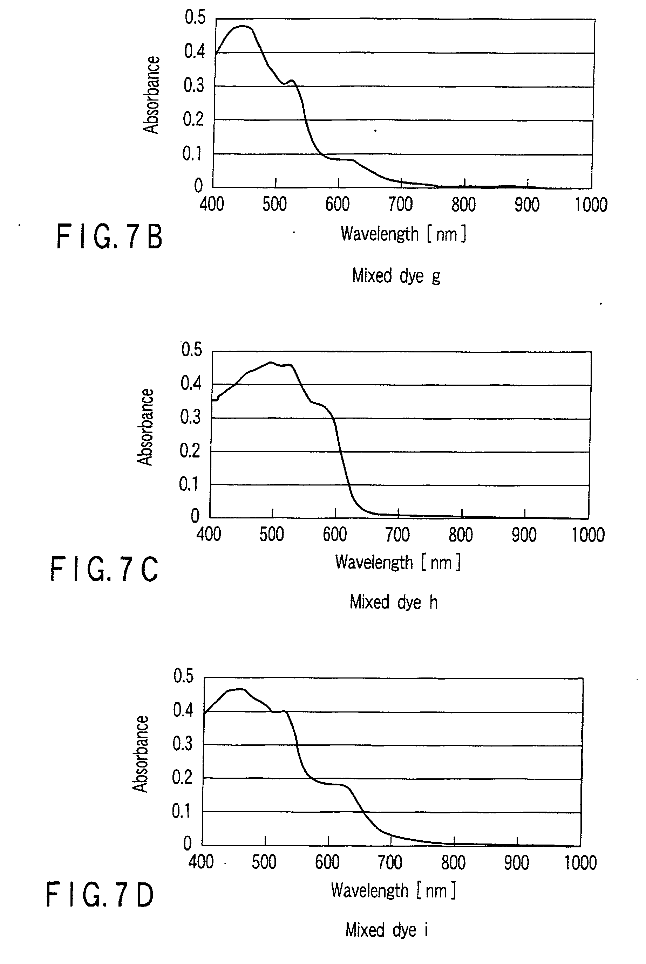

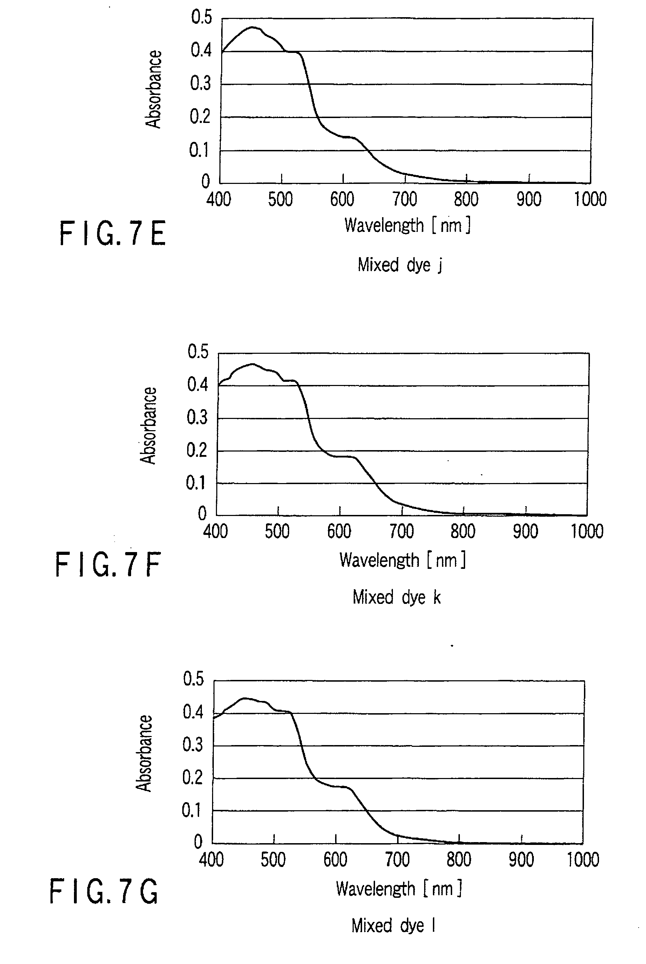

FIGS. 7A to 7G show changes in absorbance of the mixed dyes f to l with respect to the wavelength of an emitted laser beam. The absorbance of each of the mixed dyes f to l is close to about 0.4 at the recording wavelength (405 nm).

## Claims

1. An information storage medium which comprises a recording layer (1) formed by a dye material having not less than a predetermined sensitivity level to both a light beam having a first waveband and a light beam having a second waveband shorter than the first waveband,
wherein the recording layer comprises:
a concentric management information area (11); and
a concentric data area (21),
the management information area includes a plurality of bar-like patterns formed by the light beam having the first waveband, and arranged in a circumferential direction, said plurality of bar-like patterns arranged in the circumferential direction forming management information, and
the data area is configured to record data by the light beam having the second waveband,
**characterized in that** letting A1 be an absorbance when the dye material is irradiated with the light beam having the first waveband, and A2 be an absorbance when the dye material is irradiated with the light beam having the second waveband, the dye material has a light absorption characteristic which satisfies A1 ≥ A2 x 0.5.

2. A medium of claim 1, **characterized in that** the dye material is obtained by mixing a second dye material having not less than a predetermined sensitivity level to the light beam having the first waveband in a first dye material having not less than a predetermined sensitivity level to the light beam having the second waveband.

3. A medium of claim 2, **characterized in that** the dye material is obtained by mixing 7.5% of the second dye material in the first dye material.

4. A medium of claim 1, **characterized in that** the first waveband includes a wavelength of 650 nm, and the second waveband includes a wavelength of 405 nm.

## Patentansprüche

1. Informationsspeichermedium, das eine Aufzeichnungsschicht (1) umfasst, die von einem Farbstoffmaterial gebildet wird, das einen nicht geringeren als einen vorgegebenen Empfindlichkeitsgrad gegenüber sowohl einem Lichtstrahl mit einem ersten Wellenband als auch einem Lichtstrahl mit einem zweiten Wellenband, das kürzer als das erste Wellenband ist, aufweist,
wobei die Aufzeichnungsschicht einen konzentrischen Managementinformationsbereich (11) und einen konzentrischen Datenbereich (21) umfasst,
wobei der Managementinformationsbereich eine Mehrzahl von stabähnlichen Mustern umfasst, die durch den Lichtstrahl mit dem ersten Wellenband gebildet werden und in Umfangsrichtung angeordnet sind, wobei die Mehrzahl von in Umfangsrichtung angeordneten stabähnlichen Mustern die Managementinformation bildet, und
der Datenbereich derart konfiguriert ist, dass Daten durch den Lichtstrahl mit dem zweiten Wellenband aufgezeichnet werden,
**dadurch gekennzeichnet, dass**, wenn A1 für die Extinktion, wenn das Farbstoffmaterial mit dem Lichtstrahl mit dem ersten Wellenband bestrahlt wird, steht und A2 für die Extinktion, wenn das Farbstoffmaterial mit dem Lichtstrahl mit dem zweiten Wellenband bestrahlt wird, steht, das Farbstoffmaterial Lichtabsorptionseigenschaften aufweist, die A1 ≥ A2 x 0,5 erfüllen.

2. Medium nach Anspruch 1, das **dadurch gekennzeichnet ist, dass** das Farbstoffmaterial durch Mischen eines zweiten Farbstoffmaterials mit einem nicht geringeren als einem vorgegebenen Empfindlichkeitsgrad gegenüber dem Lichtstrahl mit dem ersten Wellenband in ein erstes Farbstoffmaterial mit einem nicht geringeren als einem vorgegebenen Empfindlichkeitsgrad gegenüber dem Lichtstrahl mit dem zweiten Wellenband erhalten wird.

3. Medium nach Anspruch 2, das **dadurch gekennzeichnet ist, dass** das Farbstoffmaterial durch Mischen von 7,5 % an dem zweiten Farbstoffmaterial in das erste Farbstoffmaterial erhalten wird.

4. Medium nach Anspruch 1, das **dadurch gekennzeichnet ist, dass** das erste Wellenband eine Wellenlänge von 650 nm umfasst und das zweite Wellenband eine Wellenlänge von 405 nm umfasst.

## Revendications

1. Support de stockage d'informations qui comprend une couche d'enregistrement (1) formée par un matériau de colorant ayant un niveau de sensibilité qui n'est pas inférieur à un niveau de sensibilité prédéterminé à la fois à un faisceau lumineux ayant une première gamme d'ondes et à un faisceau lumineux ayant une seconde gamme d'ondes plus courte que la première gamme d'ondes,
dans lequel la couche d'enregistrement comprend :
une zone d'informations de gestion concentrique (11), et
une zone de données concentrique (21),
la zone d'informations de gestion comprend une pluralité de motifs de barres formés par le faisceau lumineux ayant la première gamme d'ondes, et agencés dans une direction circonférentielle, ladite pluralité de motifs de barres agencés dans la direction circonférentielle formant des informations de gestion, et
la zone de données est configurée pour enregistrer des données grâce au faisceau lumineux ayant la seconde gamme d'ondes,
**caractérisé en ce que**, en supposant qu'A1 est une absorbance lorsque le matériau de colorant est irradié avec le faisceau lumineux ayant la première gamme d'ondes, et qu'A2 est une absorbance lorsque le matériau de colorant est irradié avec le faisceau lumineux ayant la seconde gamme d'ondes, le matériau de colorant a une caractéristique d'absorption optique qui est conforme à A1 ≥ A2 x 0,5.

2. Support selon la revendication 1, **caractérisé en ce que** le matériau de colorant est obtenu en mélangeant un second matériau de colorant ayant un niveau de sensibilité qui n'est pas inférieur à un niveau de sensibilité prédéterminé au faisceau lumineux ayant la première gamme d'ondes dans le premier matériau de colorant ayant un niveau de sensibilité qui n'est pas inférieur à un niveau de sensibilité prédéterminé au faisceau lumineux ayant la seconde gamme d'ondes.

3. Support selon la revendication 2, **caractérisé en ce que** le matériau de colorant est obtenu en mélangeant 7,5 % du second matériau de colorant dans le premier matériau de colorant.

4. Support selon la revendication 1, **caractérisé en ce que** la première gamme d'ondes comprend une longueur d'onde de 650 nm, et la seconde gamme d'ondes comprend une longueur d'onde de 405 nm.
